# EUROPEAN PATENT SPECIFICATION

(11) **EP 4 191 923 B1**
(45) Date of publication and mention of the grant of the patent: **03.09.2025**
(21) Application number: 21850634.3
(22) Date of filing: 29.07.2021
(51) Int. Cl.: H04L 5/00, H04L 1/1829

(54) **METHOD AND DEVICE FOR DETERMINING DOWNLINK ASSIGNMENT INDICATOR AND FOR CONFIGURING DOWNLINK ASSIGNMENT INDICATOR, STORAGE MEDIUM, TERMINAL, AND BASE STATION**
VERFAHREN UND VORRICHTUNG ZUR BESTIMMUNG EINES DOWNLINK-ZUWEISUNGSINDIKATORS UND ZUR KONFIGURATION EINES DOWNLINK-ZUWEISUNGSINDIKATORS, SPEICHERMEDIUM, ENDGERÄT UND BASISSTATION
PROCÉDÉ ET DISPOSITIF DE DÉTERMINATION D'UN INDICATEUR D'ATTRIBUTION DE LIAISON DESCENDANTE ET DE CONFIGURATION D'UN INDICATEUR D'ATTRIBUTION DE LIAISON DESCENDANTE, SUPPORT DE STOCKAGE, TERMINAL ET STATION DE BASE

(30) Priority: 31.07.2020 CN 202010759795
(43) Date of publication of application: 07.06.2023
(73) Proprietor: Spreadtrum Communications (Shanghai) Co., Ltd., Shanghai 201203 (CN)
(72) Inventor: SHEN, Xingya, Shanghai 201203 (CN)
(74) Representative: Nordmeyer, Philipp Werner
(86) International application number: PCT/CN2021/109112
(87) International publication number: WO 2022/022607

(56) References cited:
- EP-A1- 3 667 981
- WO-A1-2019/029727
- WO-A1-2020/063576
- CN-A- 110 149 717
- CN-A- 110 149 717
- CN-A- 110 830 204
- CN-A- 110 830 204

## Description

### TECHNICAL FIELD

The present disclosure generally relates to the communication technology field, and more particularly, to a method and device for determining a downlink assignment indicator, a method and device for configuring a downlink assignment indicator, a storage medium, a terminal, and a base station.

### BACKGROUND

In a 5G New Radio (NR) system, Hybrid Automatic Repeat reQuest Acknowledgment (HARQ-ACK) may be adopted to feed back to a transmitter. In HARQ-ACK technology, a receiver usually checks whether a received data packet is correct. If there is no error, the receiver may transmit an ACK to the transmitter. After receiving the ACK, the transmitter may continue to transmit a next data packet. If there is an error, the receiver may transmit a Negative Acknowledgment (NACK) to the transmitter, and the transmitter may retransmit the same data packet after receiving the NACK. However, when performing HARQ-ACK feedback to the transmitter, it often occurs that multiple consecutive Downlink Control Information (DCI) are missed for detection, which leads to a feedback error during HARQ-ACK feedback.

In the current NR system, a base station can use Downlink Assignment Indicator (DAI) to indicate to a User Equipment (UE) a number of Physical Downlink Shared Channels (PDSCHs) transmitted by the base station at a current Physical Downlink Control Channel (PDCCH) monitoring occasion. Afterward, the UE determines the number of PDSCHs scheduled by the base station according to the DAI, and generates a corresponding HARQ codebook to report to the base station. Specifically, the HARQ codebook includes ACK/NACK information for each PDSCH.

The DAI is divided into Counter DAI (C-DAI) and Total DAI (T-DAI). The C-DAI indicates a cumulative number of {serving cell, PDCCH monitoring occasion} groups up to a current serving cell and a current PDCCH monitoring occasion. The T-DAI indicates a total number of {serving cell, PDCCH monitoring occasion} groups until the current PDCCH monitoring occasion.

However, the above solution is merely applicable to a case where single DCI schedules a single PDSCH. When single DCI schedules multiple PDSCHs, it is difficult for the UE to correctly determine a size of the HARQ codebook according to the received DAI, and thus cannot report a correct HARQ codebook.

A method for determining a downlink assignment indicator is required, to enable a UE to correctly determine a number of missed detections for PDSCHs, thereby facilitate the UE to correctly report a HARQ codebook.

EP 3 667 981 A1 discloses a method for determining feedback information. The method includes: obtaining, by a receive end device, time unit aggregation information and DAI indication information that are sent by a transmit end device; determining feedback information for at least one transport block based on the time unit aggregation information and the DAI indication information; and finally sending the feedback information for the at least one transport block to the transmit end device.

CN 110 149 717 A discloses a method for codebook transmission. The method includes receiving at least one downlink transmission and indication information corresponding to the at least one downlink transmission and generating a codebook including at least one piece of feedback information corresponding to the at least one downlink transmission. The at least one downlink transmission includes a target downlink transmission corresponding to an actual occasion and a pair of a target frequency domain resource and a reference occasion. A location of feedback information corresponding to the target downlink transmission in the codebook corresponds to indication information corresponding to the target downlink transmission. The actual occasion includes a PDCCH monitoring occasion at which DCI for scheduling or carrying the target downlink transmission is located or a PDSCH reception occasion at which the target downlink transmission is located.

CN 110 830 204 A discloses a PUCCH sending method and a PUCCH receiving method. The PUCCH sending method comprises the steps: receiving at least two downlink transmissions, HARQ-ACKs of the at least two downlink transmissions being transmitted in the same time unit; determining PUCCH resources for transmitting HARQ-ACKs of the at least two downlink transmissions according to the PUCCH resources indicated by the PRI in the downlink control information DCI used by the PDCCHs corresponding to the at least two downlink transmissions respectively; and sending the corresponding HARQ-ACK of the downlink transmission on the determined PUCCH resource.

### SUMMARY

The invention is defined by the subject-matter of the appended set of claims.

The present disclosure provides a method and device for determining a downlink assignment indicator, a method and device for configuring a downlink assignment indicator, a storage medium, a terminal, and a base station, which enables a UE to discover a number of missed detections of PDSCH in time, and improves accuracy of HARQ codebooks.

### BRIEF DESCRIPTION OF THE DRAWINGS

FIG. 1 is a flow chart of a method for determining a downlink assignment indicator according to an embodiment;
FIG. 2 is a diagram of C-DAI field indication information and T-DAI field indication information according to an embodiment;
FIG. 3 is a diagram of C-DAI field indication information and T-DAI field indication information according to an embodiment;
FIG. 4 is a flow chart of a method for configuring a downlink assignment indicator according to an embodiment;
FIG. 5 is a structural diagram of a device for determining a downlink assignment indicator according to an embodiment; and
FIG. 6 is a structural diagram of a device for configuring a downlink assignment indicator according to an embodiment.

### DETAILED DESCRIPTION

As described in the background, in the current NR system, a base station can use DAI to indicate to a UE a number of PDSCHs transmitted by the base station at a current PDCCH monitoring occasion. Afterward, the UE determines the number of PDSCHs scheduled by the base station according to the DAI, and generates a corresponding HARQ codebook to report to the base station. However, the above solution is merely applicable to a case where single DCI schedules a single PDSCH. When single DCI schedules multiple PDSCHs, it is difficult for the UE to correctly determine a size of the HARQ codebook according to the received DAI, and thus cannot report a correct HARQ codebook.

Inventors of this invention found through research that in existing techniques, a UE can directly determine a number of PDCCHs according to a PDCCH monitoring occasion in DAI. If single DCI schedules a single PDSCH, a number of PDSCHs and the number of PDCCHs are equal, and the UE can determine missed detection of PDCCH when a hop occurs in the number of PDCCHs, determine the number of missed PDCCHs according to the number of hops of PDCCHs, and then report a HARQ codebook according to a correct codebook size. However, if single DCI schedules multiple PDSCHs, the number of PDSCHs is greater than the number of PDCCHs. Even if the UE determines a missed detection of PDCCH when a hop occurs in the number of PDCCHs and determines the number of hops of PDCCHs, the number of missed detections of PDSCHs cannot be determined, resulting in inability to determine the correct codebook size when reporting the HARQ codebook.

By configuring that C-DAI field indication information indicates a cumulative number of PDSCHs scheduled by a PDCCH up to a current serving cell and a current PDCCH monitoring occasion, a UE receiving DCI determines a total number of PDSCHs that should be received based on the C-DAI field indication information in the DCI, which is conducive to discovering a number of missed detections of PDSCH in time, and improves accuracy of HARQ codebooks.

In order to clarify the objects, characteristics and advantages of the disclosure, embodiments of present disclosure will be described in detail in conjunction with accompanying drawings.

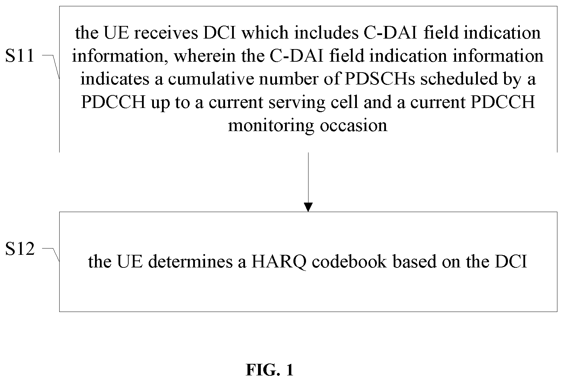

Referring to FIG. 1, FIG. 1 is a flow chart of a method for determining a downlink assignment indicator. The method is applied to a UE and includes S11 and S12.

In S11, the UE receives DCI which includes C-DAI field indication information, wherein the C-DAI field indication information indicates a cumulative number of PDSCHs scheduled by a PDCCH up to a current serving cell and a current PDCCH monitoring occasion.

In S12, the UE determines a HARQ codebook based on the DCI.

In some embodiments, the method may be implemented in a manner of software programs which are run on a processor integrated within a chip or a chip module.

In S11, a base station indicates the cumulative number of PDSCHs scheduled by the PDCCH up to the current serving cell and the current PDCCH monitoring occasion through one or more C-DAI field indication information in the DCI.

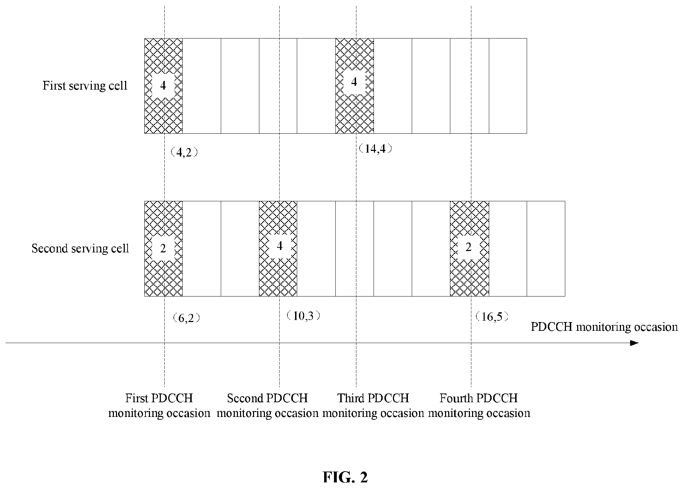

FIG. 2 is a diagram of C-DAI field indication information and T-DAI field indication information.

The embodiment as shown in FIG. 2 is applicable to two serving cells (Serving Cells), and the PDCCH schedules multiple PDSCHs at multiple PDCCH monitoring occasions.

Numbers marked in boxes (such as the number 4 or 2) are the numbers of PDSCHs scheduled by the PDCCH in the corresponding serving cell, and two numbers in brackets (such as (4, 2) or (6, 2)) are the C-DAI field indication information and T-DAI field indication information, namely (C-DAI field indication information and T-DAI field indication information).

Specifically, at a first PDCCH monitoring occasion, the PDCCH schedules 4 PDSCHs in the first serving cell, and the C-DAI field indication information indicates the total number of PDSCHs scheduled by the PDCCH, which is 4. At the same time, the PDCCH schedules two PDSCHs in the second serving cell, and the C-DAI field indication information indicates the total number of PDSCHs scheduled by the PDCCH, which is (4+2=6).

In some embodiments, if the UE fails to receive the PDCCH at the first PDCCH monitoring occasion of the first serving cell, after receiving all two PDSCHs of the second serving cell, the UE may discover that (6-2=4) PDSCHs were missed according to the C-DAI field indication information of 6 in time.

It could be understood that the T-DAI field indication information follows a representation method in the existing techniques, that is, as there are two {serving cell, PDCCH monitoring occasion} groups until the current PDCCH monitoring occasion, the T-DAI field indication information is 2.

It should be noted that if the C-TAI field indication information follows a representation method in the existing techniques, that is, the C-DAI field indication information indicates a cumulative number of {serving cell, PDCCH monitoring occasion} groups up to a current serving cell and a current PDCCH monitoring occasion, the cumulative numbers are 1 and 1 respectively, that is, no matter for the first serving cell or the second serving cell, (C-DAI field indication information, T-DAI field indication information) are both (1, 2).

From above, in the existing techniques, if the UE fails to completely receive all 4 PDSCHs in the first serving cell, for example, merely 3 PDSCHs are received, the UE cannot discover in time a missed detection of the PDSCH based on the C-DAI field indication information of 1 and the T-DAI field indication information of 2. The embodiments of the present disclosure may overcome deficiencies in the existing techniques.

Further, at the second PDCCH monitoring occasion, the PDCCH schedules 4 PDSCHs in the second serving cell, and the C-DAI field indication information indicates the total number of PDSCHs scheduled by the PDCCH, which is (6+4=10). At the third PDCCH monitoring occasion, the PDCCH schedules 4 PDSCHs in the first serving cell, and the C-DAI field indication information indicates the total number of PDSCHs scheduled by the PDCCH, which is (10+4=14). At the fourth PDCCH monitoring occasion, the PDCCH schedules 2 PDSCHs in the second serving cell, and the C-DAI field indication information indicates the total number of PDSCHs scheduled by the PDCCH, which is (14+2=16).

Still referring to FIG. 1, in S12, the UE determines the HARQ codebook based on the DCI.

Further, the UE determines the HARQ codebook based on the C-DAI field indication information.

In embodiments of the present disclosure, by configuring that C-DAI field indication information indicates a cumulative number of PDSCHs scheduled by a PDCCH up to a current serving cell and a current PDCCH monitoring occasion, a UE receiving DCI may determine a total number of PDSCHs that should be received based on the C-DAI field indication information in the DCI, which is conducive to discovering a number of missed detections of PDSCH in time, and improves accuracy of HARQ codebooks.

In some embodiments, said determining the HARQ codebook based on the C-DAI field indication information includes: determining a number of ACK/NACK information contained in the HARQ codebook based on the cumulative number of the PDSCHs indicated by the C-DAI field indication information, wherein each ACK/NACK information is in one-to-one correspondence with one of the PDSCHs.

In some embodiments, the C-DAI field indication information is carried in a last detected PDCCH which is the last PDCCH indicating a PUCCH or PUSCH carrying the HARQ codebook.

Taking the embodiment shown in FIG. 2 as an example, when 16 PDSCHs are received at the fourth PDCCH monitoring occasion, the UE can determine that a size of the reported HARQ codebook is 16, that is, including 16 pieces of ACK/NACK information. For example, a missed detection of PDCCH occurs at the third monitoring occasion on the first serving cell. The UE determines that the number of PDSCHs missed at the third PDCCH monitoring occasion is (16-10-2=4) based on the number of PDSCHs at the second PDCCH monitoring occasion being 10, the number of PDSCHs at the fourth PDCCH monitoring occasion being 2, and the total number being 16.

Further, when reporting the HARQ codebook, the UE may mark all four PDSCHs missed at the third PDCCH monitoring occasion as missed detection.

Further, for the missed PDSCHs, the ACK/NACK information may include NACK and/or 1-bit missed detection indication information.

Specifically, taking the missed detection of 4 PDSCHs at the third PDCCH monitoring occasion as an example. If the ACK/NACK information is 1-bit missed detection indication information, the HARQ codebook reported by the UE may be (1, 1, 1, 1, 1, 1, 1, 1, 1, 1, 0, 0, 0, 0, 1, 1), where the first ten 1s indicate that there is no missed detection from the first PDCCH monitoring occasion to the second PDCCH monitoring occasion, the middle four 0s indicate that 4 PDSCHs are missed at the third PDCCH monitoring occasion, and the last two 1s indicate that there is no missed detection is at the fourth PDCCH monitoring occasion.

It could be understood that if ACK/NACK information is NACK for the missed PDSCH, "1" in the 1-bit missed detection indication information may be replaced with ACK, and "0" therein may be replaced with NACK.

In the embodiments of the present disclosure, the cumulative number of the PDSCHs indicated by the C-DAI field indication information may serve as the number of ACK/NACK information contained in the HARQ codebook, and each ACK/NACK information is in one-to-one correspondence with one of the PDSCHs, so that the UE may explicitly mark the missed PDSCHs in the reported HARQ codebook to improve effectiveness and accuracy of feedback.

The DCI further includes T-DAI field indication information which indicates a total number of PDSCHs scheduled by the PDCCH until the current PDCCH monitoring occasion; and said determining a HARQ codebook based on the DCI includes: determining the HARQ codebook based on the T-DAI field indication information.

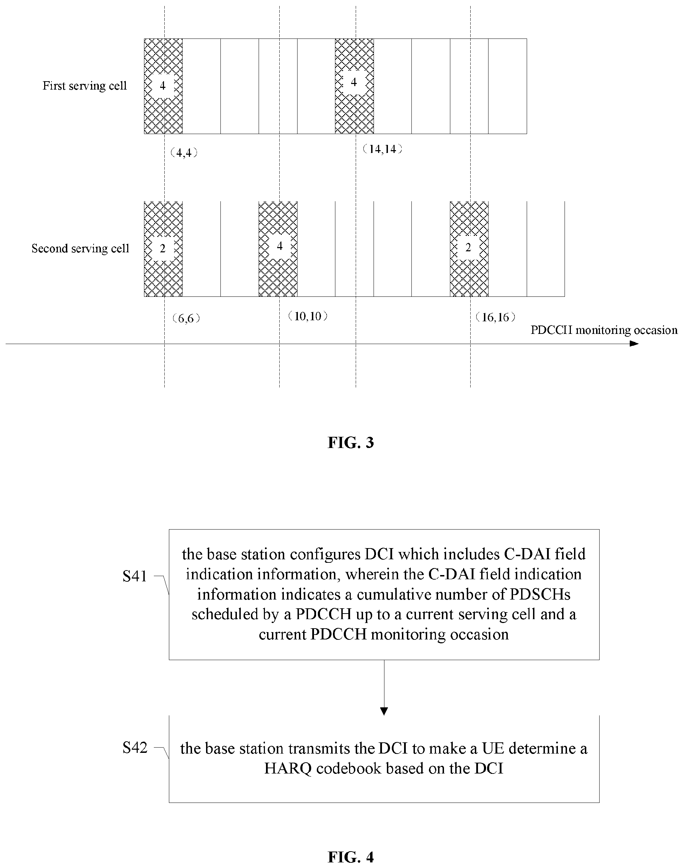

FIG. 3 is a diagram of C-DAI field indication information and T-DAI field indication information.

As shown in FIG. 3 is also applicable to two serving cells (Serving Cells), and the PDCCH schedules multiple PDSCHs at multiple PDCCH monitoring occasions.

Numbers marked in boxes (such as the number 4 or 2) are the numbers of PDSCHs scheduled by the PDCCH in the corresponding serving cell, and two numbers in brackets (such as (4, 4) or (6, 6)) are the C-DAI field indication information and T-DAI field indication information, namely (C-DAI field indication information and T-DAI field indication information).

It should be noted that the representation of the C-DAI field indication information as shown in FIG. 3 is the same as that in FIG. 2, and is not repeated here. In FIG. 3, the T-DAI field indication information and the C-DAI field indication information represent the same meaning, which indicates the total number of PDSCHs scheduled by the PDCCH at the current PDCCH monitoring occasion.

The DCI also includes the T-DAI field indication information. As algorithms/formulas involved in HARQ codebooks in existing techniques are usually implemented based on T-DAI field indication information, the UE determines, after receiving the DCI, a total number of PDSCHs that should be received until the current PDCCH monitoring occasion based on the T-DAI field indication information in the DCI, which is conducive to timely discovery of a number of missed detections of PDSCH, and improves adaptability to solutions in the existing techniques.

The C-DAI field indication information and the T-DAI field indication information are represented by consecutive character strings, and a character string representing the C-DAI field indication information is located in front of a character string representing the T-DAI field indication information.

The base station configures the DCI in a manner of (C-DAI field indication information, T-DAI field indication information). (C-DAI field indication information, T-DAI field indication information) adopts N-bit character strings, where the C-DAI field indication information uses the first N1-bit character string, the T-DAI field indication information uses the following N2-bit character string, N1 and N2 are both natural numbers, and N1+N2=N.

The C-DAI field indication information and the T-DAI field indication information are represented by consecutive character strings, and a character string representing the C-DAI field indication information is located in front of a character string representing the T-DAI field indication information, which enables the UE to more accurately determine contents of the C-DAI field indication information and the T-DAI field indication information.

FIG. 4 is a flow chart of a method for configuring a downlink assignment indicator. The method is applied to a base station and includes S41 and S42.

In S41, the base station configures DCI which includes C-DAI field indication information, wherein the C-DAI field indication information indicates a cumulative number of PDSCHs scheduled by a PDCCH up to a current serving cell and a current PDCCH monitoring occasion.

In S42, the base station transmits the DCI to make a UE determine a HARQ codebook based on the DCI.

The DCI further includes T-DAI field indication information which indicates a total number of PDSCHs scheduled by the PDCCH until the current PDCCH monitoring occasion; and said transmitting the DCI to make a UE determine a HARQ codebook based on the DCI includes: transmitting the DCI to make the UE determine the HARQ codebook based on the T-DAI field indication information.

The C-DAI field indication information and the T-DAI field indication information are represented by consecutive character strings.

More details of S41 and S42 can be referred to related descriptions of S11 and S12 as shown in FIG. 1, and are not repeated here.

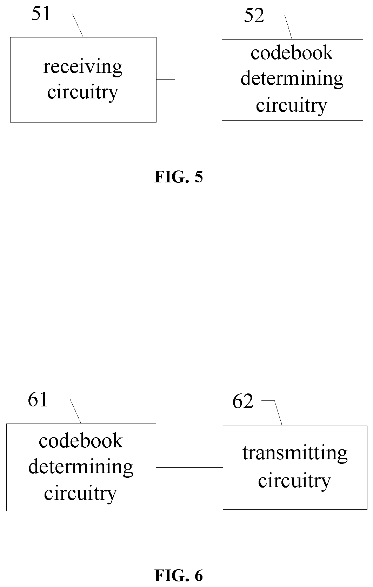

Referring to FIG. 5, FIG. 5 is a structural diagram of a device for determining a downlink assignment indicator. The apparatus is applied to a UE and includes a receiving circuitry 51 configured to receive DCI which includes C-DAI field indication information, wherein the C-DAI field indication information indicates a cumulative number of PDSCHs scheduled by a PDCCH up to a current serving cell and a current PDCCH monitoring occasion; and a codebook determining circuitry 52 configured to determine a HARQ codebook based on the DCI.

The apparatus corresponds to a chip with a data processing function in a UE, or to a chip module including a chip with a data processing function in the UE, or to the UE.

Principles, specific implementation manners and advantages of the device for determining the downlink assignment indicator can be referred to related descriptions of the method for determining the downlink assignment indicator, and are not repeated here.

Referring to FIG. 6, FIG. 6 is a structural diagram of a device for configuring a downlink assignment indicator. The apparatus is applied to a base station and includes a codebook determining circuitry 61 configured to configure DCI which includes C-DAI field indication information, wherein the C-DAI field indication information indicates a cumulative number of PDSCHs scheduled by a PDCCH up to a current serving cell and a current PDCCH monitoring occasion; and a transmitting circuitry 62 configured to transmit the DCI to make a UE determine a HARQ codebook based on the DCI.

Principles, specific implementation manners and advantages of the device for configuring the downlink assignment indicator can be referred to related descriptions of the method for configuring the downlink assignment indicator, and are not repeated here.

A storage medium having computer instructions stored therein is provided, wherein when the computer instructions are executed, the above method is performed. In some embodiments, the storage medium may be a computer readable storage medium, and may include a non-volatile or a non-transitory memory, or include an optical disk, a magnetic disk or a solid disk.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

A terminal including a memory and a processor is provided, wherein the memory has computer instructions stored therein, and when the processor executes the computer instructions, the above method is performed. The terminal may include but not limited to a mobile phone, a computer or a tablet computer.

The terminal may refer to various forms of UE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

A base station including a memory and a processor is provided, wherein the memory has computer instructions stored therein, and when the processor executes the computer instructions, the above method is performed.

The Base Station (BS) is also referred to as a base station equipment, and is a device deployed in a Radio Access Network (RAN) to provide radio communication functions. For example, an equipment that provides a base station function in a 2G network includes a Base Transceiver Station (BTS). An equipment that provides the base station function in a 3G network includes a Node B. An equipment that provides the base station function in a 4G network includes an evolved node B (eNB). In a Wireless Local Area Network (WLAN), an equipment that provides the base station function is an Access Point (AP). An equipment that provides the base station function in a 5G New Radio (NR) includes gNB and a continuously evolved Node B (ng-eNB), where gNB and the terminal use NR technology for communication, ng-eNB and the terminal use Evolved Universal Terrestrial Radio Access (E-UTRA) technology for communication, and both gNB and ng-eNB can be connected to a 5G core network. And the base station also refers to an equipment that provides the base station function in a new communication system in the future.

A base station controller in the embodiments of the present disclosure refers to an apparatus in charge of the base station, such as a Base Station Controller (BSC) in a 2G network, a Radio Network Controller (RNC) in a 3G network, or any apparatus that controls and manages the base station in new communication systems in the future.

The network in the embodiments of the present disclosure refers to a communication network that provides communication services for terminals, including a base station of a radio access network, a base station controller of a radio access network, and a device on a core network side.

Each module/unit of each apparatus and product described in the above embodiments may be a software module/unit or a hardware module/unit, or may be a software module/unit in part, and a hardware module/unit in part. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

## Claims

1. A method performed by a User Equipment, UE, for determining a downlink assignment indicator, comprising:
receiving (S11), from a base station, Downlink Control Information, DCI, which comprises Counter-Downlink Assignment Indicator, C-DAI, field indication information, wherein the C-DAI field indication information indicates a cumulative number of Physical Downlink Shared Channels, PDSCHs, scheduled by a Physical Downlink Control Channel, PDCCH, up to a current serving cell and a current PDCCH monitoring occasion; and
determining (S12) a Hybrid Automatic Repeat reQuest, HARQ, codebook based on the DCI;
wherein the DCI further comprises Total-Downlink Assignment Indicator, T-DAI, field indication information which indicates a total number of PDSCHs scheduled by the PDCCH until the current PDCCH monitoring occasion;
**characterized in that** the C-DAI field indication information and the T-DAI field indication information are represented by consecutive character strings, and a character string representing the C-DAI field indication information is located in front of a character string representing the T-DAI field indication information.

2. The method according to claim 1, **characterized in that** said determining (S12) a HARQ codebook based on the DCI comprises:
determining the HARQ codebook based on the C-DAI field indication information.

3. The method according to claim 2, **characterized in that** said determining the HARQ codebook based on the C-DAI field indication information comprises:
determining a number of Acknowledgment/Negative Acknowledgment, ACK/NACK, information contained in the HARQ codebook based on the cumulative number of the PDSCHs indicated by the C-DAI field indication information, wherein each ACK/NACK information is in one-to-one correspondence with one of the PDSCHs.

4. The method according to claim 3, **characterized in that** for a missed PDSCH, the ACK/NACK information comprises NACK and/or 1-bit missed detection indication information.

5. The method according to claim 1, **characterized in that**
said determining a HARQ codebook based on the DCI (S12) comprises: determining the HARQ codebook based on the T-DAI field indication information.

6. A method performed by a base station for configuring a downlink assignment indicator, comprising:
configuring (S41) Downlink Control Information, DCI, which comprises Counter-Downlink Assignment Indicator, C-DAI, field indication information, wherein the C-DAI field indication information indicates a cumulative number of Physical Downlink Shared Channels, PDSCHs, scheduled by a Physical Downlink Control Channel, PDCCH, up to a current serving cell and a current PDCCH monitoring occasion; and
transmitting (S42), to a User Equipment, UE, the DCI to make the UE determine a Hybrid Automatic Repeat reQuest, HARQ, codebook based on the DCI;
wherein the DCI further comprises Total-Downlink Assignment Indicator, T-DAI, field indication information which indicates a total number of PDSCHs scheduled by the PDCCH until the current PDCCH monitoring occasion;
**characterized in that** the C-DAI field indication information and the T-DAI field indication information are represented by consecutive character strings, and a character string representing the C-DAI field indication information is located in front of a character string representing the T-DAI field indication information.

7. The method according to claim 6, **characterized in that**
said transmitting (S42) the DCI to make the UE determine a HARQ codebook based on the DCI comprises: transmitting the DCI to make the UE determine the HARQ codebook based on the T-DAI field indication information.

8. A User Equipment, UE, device for determining a downlink assignment indicator, comprising:
a receiving circuitry (51) configured to receive, from a base station, Downlink Control Information, DCI, which comprises Counter-Downlink Assignment Indicator, C-DAI, field indication information, wherein the C-DAI field indication information indicates a cumulative number of Physical Downlink Shared Channels, PDSCHs, scheduled by a Physical Downlink Control Channel, PDCCH, up to a current serving cell and a current PDCCH monitoring occasion; and
a codebook determining circuitry (52) configured to determine a Hybrid Automatic Repeat reQuest, HARQ, codebook based on the DCI;
wherein the DCI further comprises Total-Downlink Assignment Indicator, T-DAI, field indication information which indicates a total number of PDSCHs scheduled by the PDCCH until the current PDCCH monitoring occasion;
**characterized in that** the C-DAI field indication information and the T-DAI field indication information are represented by consecutive character strings, and a character string representing the C-DAI field indication information is located in front of a character string representing the T-DAI field indication information.

9. A base station device for configuring a downlink assignment indicator, comprising:
a configuring circuitry (61) configured to configure Downlink Control Information, DCI, which comprises Counter-Downlink Assignment Indicator, C-DAI, field indication information, wherein the C-DAI field indication information indicates a cumulative number of Physical Downlink Shared Channels, PDSCHs, scheduled by a Physical Downlink Control Channel, PDCCH, up to a current serving cell and a current PDCCH monitoring occasion; and
a transmitting circuitry (62) configured to transmit, to a User Equipment, UE, the DCI to make the UE determine a Hybrid Automatic Repeat reQuest, HARQ, codebook based on the DCI;
wherein the DCI further comprises Total-Downlink Assignment Indicator, T-DAI, field indication information which indicates a total number of PDSCHs scheduled by the PDCCH until the current PDCCH monitoring occasion;
**characterized in that** the C-DAI field indication information and the T-DAI field indication information are represented by consecutive character strings, and a character string representing the C-DAI field indication information is located in front of a character string representing the T-DAI field indication information.

10. A storage medium having computer instructions stored therein, **characterized in that** when the computer instructions are executed by a processor, the method of any one of claims 1 to 5 or the method of claim 6 or 7 is performed.

11. A terminal product comprising a memory and a processor, **characterized in that** the memory has computer instructions stored therein, and when the processor executes the computer instructions, the method of any one of claims 1 to 5 is performed.

12. A base station product comprising a memory and a processor, **characterized in that** the memory has computer instructions stored therein, and when the processor executes the computer instructions, the method of claim 6 or 7 is performed.

## Patentansprüche

1. Verfahren, das von einer Benutzerausrüstung, UE, durchgeführt wird, zur Bestimmung eines Downlink-Zuweisungsindikators, umfassend:
Empfangen (S11), von einer Basisstation, von einer Downlink-Control-Information, DCI, die eine Counter-Downlink-Zuweisungsindikator-, C-DAI, Field-Indication-Information umfasst, wobei die C-DAI Field-Indication-Information eine kumulative Anzahl von Physical-Downlink-Shared-Channels, PDSCHs, angibt, die von einem Physical-Downlink-Control-Channel, PDCCH, bis zu einer aktuellen bedienenden Zelle und einem aktuellen PDCCH-Überwachungsanlass geplant sind; und
Bestimmen (S12) eines Hybrid-Automatic-Repeat-reQuest-, HARQ, -Codebuchs basierend auf der DCI;
wobei die DCI weiter eine Total-Downlink-Zuweisungsindikator, T-DAI, -Field-Indication-Information umfasst, die eine Gesamtzahl von PDSCHs angibt, die von dem PDCCH bis zum aktuellen PDCCH-Überwachungsanlass geplant sind;
**dadurch gekennzeichnet, dass** die C-DAI Field-Indication-Information und die T-DAI Field-Indication-Information durch aufeinanderfolgende Zeichenketten repräsentiert werden und eine Zeichenkette, die die C-DAI Field-Indication-Information repräsentiert, vor einer Zeichenkette lokalisiert ist, die die T-DAI Field-Indication-Information repräsentiert.

2. Verfahren nach Anspruch 1, **dadurch gekennzeichnet, dass** das Bestimmen (S12) eines HARQ-Codebuchs basierend auf der DCI Folgendes umfasst:
Bestimmen des HARQ-Codebuchs basierend auf der C-DAI Field-Indication-Information.

3. Verfahren nach Anspruch 2, **dadurch gekennzeichnet, dass** das Bestimmen des HARQ-Codebuchs basierend auf der C-DAI Field-Indication-Information Folgendes umfasst:
Bestimmen einer Anzahl von Acknowledgment/Negative Acknowledgment-, ACK/NACK, -Informationen, die in dem HARQ-Codebuch enthalten sind, basierend auf der kumulativen Anzahl der PDSCHs, die durch die C-DAI Field-Indication-Information angegeben sind, wobei jede ACK/NACK-Information in eins-zu-eins-Entsprechung mit einem der PDSCHs ist.

4. Verfahren nach Anspruch 3, **dadurch gekennzeichnet, dass** für einen verpassten PDSCH die ACK/NACK-Information eine NACK- und/oder eine 1-Bit-verpasste-Detektions-Indication-Information umfasst.

5. Verfahren nach Anspruch 1, **dadurch gekennzeichnet, dass**
das Bestimmen eines HARQ-Codebuchs basierend auf der DCI (S12) Folgendes umfasst: Bestimmen des HARQ-Codebuchs basierend auf der T-DAI Field-Indication-Information.

6. Verfahren, durchgeführt durch eine Basisstation zum Konfigurieren eines Downlink-Zuweisungsindikators, umfassend:
Konfigurieren (S41) von einer Downlink-Control-Informationen, DCI, die eine Counter-Downlink-Zuweisungsindikator-, C-DAI, Field-Indication-Information umfasst, wobei die C-DAI Field-Indication-Information eine kumulative Anzahl von Physical-Downlink-Shared-Channels, PDSCHs, angibt, die von einem Physical-Downlink-Control-Channel, PDCCH, bis zu einer aktuellen bedienenden Zelle und einem aktuellen PDCCH-Überwachungsanlass geplant sind; und
Übertragen (S42), an eine Benutzerausrüstung, UE, der DCI, damit die UE basierend auf der DCI ein Hybrid-Automatic-Repeat-ReQuest-, HARQ, -Codebuch bestimmt;
wobei die DCI weiter eine Total-Downlink-Zuweisungsindikator, T-DAI, -Field-Indication-Information umfasst, die eine Gesamtzahl von PDSCHs angibt, die von dem PDCCH bis zum aktuellen PDCCH-Überwachungsanlass geplant sind;
**dadurch gekennzeichnet, dass** die C-DAI Field-Indication-Information und die T-DAI Field-Indication-Information durch aufeinanderfolgende Zeichenketten repräsentiert werden und eine Zeichenkette, die die C-DAI Field-Indication-Information repräsentiert, vor einer Zeichenkette lokalisiert ist, die die T-DAI Field-Indication-Information repräsentiert.

7. Verfahren nach Anspruch 6, **dadurch gekennzeichnet, dass**
das Übertragen (S42) der DCI, damit die UE ein HARQ-Codebuch basierend auf der DCI bestimmt, Folgendes umfasst: Übertragen der DCI, damit die UE das HARQ-Codebuch basierend auf der T-DAI Field-Indication-Information bestimmt.

8. Benutzerausrüstungs-, UE, -vorrichtung zur Bestimmung eines Downlink-Zuweisungsindikators, umfassend:
eine Empfangsschaltung (51), die konfiguriert ist, um von einer Basisstation eine Downlink-Control-Information, DCI, zu empfangen, die eine Counter-Downlink-Zuweisungsindikator-, C-DAI, Field-Indication-Information umfasst, wobei die C-DAI Field-Indication-Information eine kumulative Anzahl von Physical-Downlink-Shared-Channels, PDSCHs, angibt, die von einem Physical-Downlink-Control-Channel, PDCCH, bis zu einer aktuellen bedienenden Zelle und einem aktuellen PDCCH-Überwachungsanlass geplant sind; und
eine Codebuch-Bestimmungsschaltung (52), die konfiguriert ist, um ein Hybrid-Automatic-Repeat-reQuest-, HARQ, -Codebuch basierend auf der DCI zu bestimmen;
wobei die DCI weiter eine Total-Downlink-Zuweisungsindikator, T-DAI, -Field-Indication-Information umfasst, die eine Gesamtzahl von PDSCHs angibt, die von dem PDCCH bis zum aktuellen PDCCH-Überwachungsanlass geplant sind;
**dadurch gekennzeichnet, dass** die C-DAI Field-Indication-Information und die T-DAI Field-Indication-Information durch aufeinanderfolgende Zeichenketten repräsentiert sind und eine Zeichenkette, die die C-DAI Field-Indication-Information repräsentiert, vor einer Zeichenkette lokalisiert ist, die die T-DAI Field-Indication-Information repräsentiert.

9. Basisstationsvorrichtung zum Konfigurieren eines Downlink-Zuweisungsindikators, umfassend:
eine Konfigurationsschaltung (61), die konfiguriert ist, um eine Downlink-Control-Information, DCI, zu konfigurieren, die eine Counter-Downlink-Zuweisungsindikator-, C-DAI, -Field-Indication-Information umfasst, wobei die C-DAI Field-Indication-Information eine kumulative Anzahl von Physical-Downlink-Shared-Channels, PDSCHs, angibt, die von einem Physical-Downlink-Control-Channel, PDCCH, bis zu einer aktuellen bedienenden Zelle und einem aktuellen PDCCH-Überwachungsanlass geplant sind; und
eine Übertragungsschaltung (62), die konfiguriert ist, um an eine Benutzerausrüstung, UE, die DCI zu übertragen, damit die UE basierend auf der DCI ein Hybrid-Automatic-Repeat-ReQuest-, HARQ, -Codebuch bestimmt;
wobei die DCI weiter eine Total-Downlink-Zuweisungsindikator, T-DAI, -Field-Indication-Information umfasst, die eine Gesamtzahl von PDSCHs angibt, die von dem PDCCH bis zum aktuellen PDCCH-Überwachungsanlass geplant sind;
**dadurch gekennzeichnet, dass** die C-DAI Field-Indication-Information und die T-DAI Field-Indication-Information durch aufeinanderfolgende Zeichenketten repräsentiert sind und eine Zeichenkette, die die C-DAI Field-Indication-Information repräsentiert, vor einer Zeichenkette lokalisiert ist, die die T-DAI Field-Indication-Information repräsentiert.

10. Speichermedium, aufweisend darauf gespeicherte Computeranweisungen, **dadurch gekennzeichnet, dass**, wenn die Computeranweisungen von einem Prozessor ausgeführt werden, das Verfahren nach einem der Ansprüche 1 bis 5 oder das Verfahren nach Anspruch 6 oder 7 durchgeführt wird.

11. Endgerätprodukt, umfassend einen Speicher und einen Prozessor, **dadurch gekennzeichnet, dass** der Speicher darin gespeicherte Computeranweisungen aufweist, und wenn der Prozessor die Computeranweisungen ausführt, das Verfahren nach einem der Ansprüche 1 bis 5 durchgeführt wird.

12. Basisstationsprodukt, umfassend einen Speicher und einen Prozessor, **dadurch gekennzeichnet, dass** der Speicher darin gespeicherte Computeranweisungen aufweist, und wenn der Prozessor die Computeranweisungen ausführt, das Verfahren nach Anspruch 6 oder 7 durchgeführt wird.

## Revendications

1. Procédé mis en œuvre par un Équipement Utilisateur, UE, pour déterminer un indicateur d'attribution de liaison descendante, comprenant :
la réception (S11), en provenance d'une station de base, d'une information de commande de liaison descendante, DCI, qui comprend une information d'indication de champ d'indicateur d'attribution de liaison descendante de compteur, C-DAI, dans lequel l'information d'indication de champ C-DAI indique un nombre cumulé de canaux physiques partagés de liaison descendante, PDSCH, planifiés par un canal de commande physique de liaison descendante, PDCCH, jusqu'à une cellule de desserte actuelle et une occasion de surveillance de PDCCH actuel ; et
la détermination (S12) d'un livre de codes de demande de répétition automatique hybride, HARQ, sur la base de la DCI ;
dans lequel la DCI comprend en outre une information d'indication de champ d'indicateur d'attribution de liaison descendante de total, T-DAI, qui indique un nombre total de PDSCH planifiés par le PDCCH jusqu'à l'occasion de surveillance de PDCCH actuel ;
**caractérisé en ce que** l'information d'indication de champ C-DAI et l'information d'indication de champ T-DAI sont représentées par des chaînes de caractères consécutives, et une chaîne de caractères représentant l'information d'indication de champ C-DAI est située devant une chaîne de caractères représentant l'information d'indication de champ T-DAI.

2. Procédé selon la revendication 1, **caractérisé en ce que** ladite détermination (S12) d'un livre de codes de HARQ sur la base de la DCI comprend :
la détermination du livre de codes de HARQ sur la base de l'information d'indication de champ C-DAI.

3. Procédé selon la revendication 2, **caractérisé en ce que** ladite détermination du livre de codes de HARQ sur la base de l'information d'indication de champ C-DAI comprend :
la détermination d'un nombre d'informations d'accusé de réception/accusé de réception négatif, ACK/NACK, contenues dans le livre de codes de HARQ sur la base du nombre cumulé des PDSCH indiqués par l'information d'indication de champ C-DAI, dans lequel chaque information ACK/NACK est dans une correspondance biunivoque avec l'un des PDSCH.

4. Procédé selon la revendication 3, **caractérisé en ce que**, pour un PDSCH manqué, l'information ACK/NACK comprend une information NACK et/ou une information d'indication de détection manquée de 1 bit.

5. Procédé selon la revendication 1, **caractérisé en ce que**
ladite détermination d'un livre de codes de HARQ sur la base de la DCI (S12) comprend : la détermination du livre de codes de HARQ sur la base de l'information d'indication de champ T-DAI.

6. Procédé mis en œuvre par une station de base pour configurer un indicateur d'attribution de liaison descendante, comprenant :
la configuration (S41) d'une information de commande de liaison descendante, DCI, qui comprend une information d'indication de champ d'indicateur d'attribution de liaison descendante de compteur, C-DAI, dans lequel l'information d'indication de champ C-DAI indique un nombre cumulé de canaux physiques partagés de liaison descendante, PDSCH, planifiés par un canal de commande physique de liaison descendante, PDCCH, jusqu'à une cellule de desserte actuelle et une occasion de surveillance de PDCCH actuel ; et
la transmission (S42), à un Équipement Utilisateur, UE, de la DCI pour amener l'UE à déterminer un livre de codes de demande de répétition automatique hybride, HARQ, sur la base de la DCI ;
dans lequel la DCI comprend en outre une information d'indication de champ d'indicateur d'attribution de liaison descendante de total, T-DAI, qui indique un nombre total de PDSCH planifiés par le PDCCH jusqu'à l'occasion de surveillance de PDCCH actuel ;
**caractérisé en ce que** l'information d'indication de champ C-DAI et l'information d'indication de champ T-DAI sont représentées par des chaînes de caractères consécutives, et une chaîne de caractères représentant l'information d'indication de champ C-DAI est située devant une chaîne de caractères représentant l'information d'indication de champ T-DAI.

7. Procédé selon la revendication 6, **caractérisé en ce que** ladite transmission (S42) de la DCI pour amener l'UE à déterminer un livre de codes de HARQ sur la base de la DCI comprend : la transmission de la DCI pour amener l'UE à déterminer le livre de codes de HARQ sur la base l'information d'indication de champ T-DAI.

8. Dispositif d'Équipement Utilisateur, UE, pour déterminer un indicateur d'attribution de liaison descendante, comprenant :
un circuit de réception (51) configuré pour recevoir, en provenance d'une station de base, une information de commande de liaison descendante, DCI, qui comprend une information d'indication de champ d'indicateur d'attribution de liaison descendante de compteur, C-DAI, dans lequel l'information d'indication de champ C-DAI indique un nombre cumulé de canaux physiques partagés de liaison descendante, PDSCH, planifiés par un canal de commande physique de liaison descendante, PDCCH, jusqu'à une cellule de desserte actuelle et une occasion de surveillance de PDCCH actuel ; et
un circuit de détermination (52) de livre de codes configuré pour déterminer un livre de codes de demande de répétition automatique hybride, HARQ, sur la base de la DCI ;
dans lequel la DCI comprend en outre une information d'indication de champ d'indicateur d'attribution de liaison descendante de total, T-DAI, qui indique un nombre total de PDSCH planifiés par le PDCCH jusqu'à l'occasion de surveillance de PDCCH actuel ;
**caractérisé en ce que** l'information d'indication de champ C-DAI et l'information d'indication de champ T-DAI sont représentées par des chaînes de caractères consécutives, et une chaîne de caractères représentant l'information d'indication de champ C-DAI est située devant une chaîne de caractères représentant l'information d'indication de champ T-DAI.

9. Dispositif de station de base pour configurer un indicateur d'attribution de liaison descendante, comprenant :
un circuit de configuration (61) configuré pour configurer une information de commande de liaison descendante, DCI, qui comprend une information d'indication de champ d'indicateur d'attribution de liaison descendante de compteur, C-DAI, dans lequel l'information d'indication de champ C-DAI indique un nombre cumulé de canaux physiques partagés de liaison descendante, PDSCH, planifiés par un canal de commande physique de liaison descendante, PDCCH, jusqu'à une cellule de desserte actuelle et une occasion de surveillance de PDCCH actuel ; et
un circuit de transmission (62) configuré pour transmettre, à un Équipement Utilisateur, UE, la DCI pour amener l'UE à déterminer un livre de codes de demande de répétition automatique hybride, HARQ, sur la base de la DCI ;
dans lequel la DCI comprend en outre une information d'indication de champ d'indicateur d'attribution de liaison descendante de total, T-DAI, qui indique un nombre total de PDSCH planifiés par le PDCCH jusqu'à l'occasion de surveillance de PDCCH actuel ;
**caractérisé en ce que** l'information d'indication de champ C-DAI et l'information d'indication de champ T-DAI sont représentées par des chaînes de caractères consécutives, et une chaîne de caractères représentant l'information d'indication de champ C-DAI est située devant une chaîne de caractères représentant l'information d'indication de champ T-DAI.

10. Support de stockage dans lequel sont stockées des instructions informatiques, **caractérisé en ce que**, lorsque les instructions informatiques sont mises en œuvre par un processeur, le procédé selon l'une quelconque des revendications 1 à 5 ou le procédé selon la revendication 6 ou 7 est mis en œuvre.

11. Produit de terminal comprenant une mémoire et un processeur, **caractérisé en ce que** la mémoire présente des instructions informatiques stockées dans celle-ci, et lorsque le processeur met en œuvre les instructions informatiques, le procédé selon l'une quelconque des revendications 1 à 5 est mis en œuvre.

12. Produit de station de base comprenant une mémoire et un processeur, **caractérisé en ce que** la mémoire présente des instructions informatiques stockées dans celle-ci, et lorsque le processeur met en œuvre les instructions informatiques, le procédé selon la revendication 6 ou 7 est mis en œuvre.
